# EUROPÄISCHE PATENTSCHRIFT

(11) **EP 2 660 044 B1**
(45) Veröffentlichungstag und Bekanntmachung des Hinweises auf die Patenterteilung: **04.04.2018**
(21) Anmeldenummer: 13163842.1
(22) Anmeldetag: 16.04.2013
(51) Int. Cl.: B32B 15/08, B32B 15/088, B32B 1/08, E02D 27/52, F16L 57/00, F16L 58/00, F16L 9/02, F16L 9/147

(54) **VERSCHLEISSINDIKATORSYSTEM FÜR OFFSHORE-KORROSIONSSCHUTZ-UMHÜLLUNGSSYSTEME**
WEAR INDICATOR SYSTEM FOR OFFSHORE CORROSION PROTECTION COATING SYSTEMS
SYSTÈME D'INDICATEUR D'USURE POUR DES SYSTÈMES DE REVÊTEMENT ANTICORROSION OFFSHORES

(30) Priorität: 30.04.2012 DE 102012207179
(43) Veröffentlichungstag der Anmeldung: 06.11.2013
(73) Patentinhaber: Evonik Degussa GmbH, 45128 Essen (DE)
(72) Erfinder: Berger, Jan, 44141 Dortmund (DE); Häger, Harald, 59348 Lüdinghausen (DE); Hartmann, Markus, 48324 Sendenhorst (DE); Nitsche, Jasmin, 44141 Dortmund (DE)

(56) Entgegenhaltungen:
- EP-A1- 1 351 000
- WO-A1-2010/094528
- DE-A1-102007 040 683
- DE-B4- 10 349 109
- DE-U1- 20 311 617
- US-A- 4 523 141
- US-A- 4 589 275
- US-B2- 6 913 043
- Ioseba Tena: "Automating ROV Operations in aid of the Oil & Gas Offshore Industry", SeeByte Ltd , August 2011 (2011-08), Retrieved from the Internet: URL:http://www.unmannedsystemstechnology.c om/wp-content/uploads/2013/10/White-Paper- Automating-ROV-Operations.pdf [retrieved on 2016-12-09]
- Andy McLea: "Semi Swath Research Vessel Bibby Tethra, Introduction & Technical Presentation", Osiris Projects , 23 January 2012 (2012-01-23), page 1,2,28,29, Retrieved from the Internet: URL:http://www.ths.org.uk/documents/ths.or g.uk/downloads/bibby_tethra_presentation__ -_19_jan_2012.pdf [retrieved on 2016-12-09]
- Andreas W Momber ET AL: "of SSPC: The Society for Protective Coatings and the Painting and Decorating Contractors of America (PDCA). T Investigating Corrosion Protection of Offshore Wind Towers Burbo Bank Offshore Wind Farm (Liverpool Bay) Courtesy of Siemens Wind Power", , 1 January 2008 (2008-01-01), XP055180375, Retrieved from the Internet: URL:http://www.vliz.be/imisdocs/publicatio ns/237912.pdf [retrieved on 2015-03-31]
- Karsten Mühlberg: "CORROSION PROTECTION FOR WINDMILLS ONSHORE AND OFFSHORE", , 1 August 2004 (2004-08-01), XP055328053, Köln Retrieved from the Internet: URL:http://www.galvinfo.com/Thermal_Sprayi ng/CaseStudy/windmills-1.pdf [retrieved on 2016-12-12]

## Beschreibung

Die Erfindung betrifft ein Verschleißindikatorsystem für Metallrohre, die Teil eines Offshorebauwerks oder einer Rohrleitung sind und mit einem Korrosionsschutzsystem umhüllt sind.

Als Offshorebauwerk werden feststehende Bauwerke bezeichnet, die in der offenen See vor der Küste errichtet werden. Beispiele für derartige Offshorebauwerke sind Windenergieanlagen, Bohrinseln und Leuchttürme. Die in Frage kommenden Rohrleitungen sind starre Rohre mit einer massiven Wandung aus Metall, im Gegensatz zu flexiblen Rohren mehrschichtigen Aufbaus.

Die Metallrohre sind beispielsweise Teil der Gründungsstruktur von Offshore-Bauwerken. Die Gründungsstruktur von Offshore-Bauwerken ist der Bereich, der die eigentliche Funktionseinheit trägt. Bei Windenergieanlagen trägt die Gründungsstruktur den Turm einschließlich Turbine und Rotoren. Bei Bohrinseln trägt die Gründungsstruktur die Plattform einschließlich Aufbauten. Bei Leuchttürmen trägt die Gründungsstruktur den Turm, soweit vorhanden, sowie das Feuer. Die Gründungsstruktur liegt unter Wasser, in der Wechselwasserzone, in der Gischtzone sowie gegebenenfalls in der Aerosolzone. Die Gründungsstruktur schließt die Gründungselemente ein, mit denen sie im Meeresboden verankert ist. Ein Beispiel für die Gründung einer Offshore-Windenergieanlage ist in der DE 103 49 109 B4 beschrieben.

Im Zuge des geplanten Ausbaus der Windenergienutzung ist für die kommenden Jahre sowohl in der Nordsee als auch in anderen Meeren sowie Binnenseen eine Vielzahl von Offshore-Windenergieanlagen geplant. Das mechanische Gesamtsystem einer Offshore-Windenergieanlage besteht aus den Komponenten Turbine, Rotoren, Turm und Gründungsstruktur.

Zur Gründung dieser Anlagen auf dem Boden des Gewässers, an Standorten bis über 100 km von der Küste entfernt, sind spezielle Konstruktionen erforderlich, die von den Konstruktionen im Onshore-Bereich stark abweichen. Teilbereiche dieser aufwendigen Konstruktionen, wie z. B. Monopiles, Jackets, Tripods, Tripiles etc., sind hohen statischen und vor allem dynamischen sowie korrosiven Belastungen ausgesetzt. Je nach Lage und Wassertiefe am jeweils betrachteten Standort sind die sogenannte 50-Jahres-Welle sowie der Tidenhub zu berücksichtigen. Hinzu kommen starke UV-Strahlung, salziges Spritzwasser, Gischt, Aerosole, Temperaturwechsel, mechanische Belastungen, Bewuchs mit Muscheln und anderen Lebewesen und damit zusammenhängender mechanischer Abtrag durch Tiere sowie chemischer Abtrag durch Sekretabsonderungen von Tieren und anderen Meereslebewesen. Für diese Konstruktionen werden Stahlrohre eingesetzt, die aus Korrosionsschutzgründen entweder luftdicht abgeschlossen oder mit Beton ausgefüllt sein können. Darüber hinaus können Strom- oder sonstige Versorgungsleitungen durch die Stahlkonstruktionsrohre verlaufen.

Bisher werden die zur Konstruktion notwendigen Metallrohre mit wesentlich dickeren Wandstärken (bis zu 25 %) als unmittelbar nötig ausgelegt und es kommen hier konventionelle Lacke, meistens auf Epoxidharzbasis oder Polyurethanbasis, für den Korrosionsschutz zum Einsatz. Einen besonderen Schutz gegen mechanische Belastungen bieten diese Lacksysteme im Regelfall nicht. Außerdem müssen diese häufig per Hand in großen Höhen aufgetragen werden, was zur Folge hat, dass die Qualitätskontrolle schwierig ist. Die Qualität einer derartigen Beschichtung ist nicht mit der einer werksseitig vorgenommenen Beschichtung vergleichbar.

In der EP 2 511 430 wird beschrieben, dass Stahlkonstruktionsrohre, die mit einer extrudierten Schicht aus einer Polyamidformmasse umhüllt sind, in der Gründungsstruktur von Offshorebauwerken verwendet werden können. Damit wird ein besserer Schutz gegen mechanische Belastungen sowie gegen Korrosion und UV-Bestrahlung erzielt als bei den bisher bekannten einschlägigen Rohren. Die Umhüllung kann auch mehrschichtig ausgebildet sein.

Rohrleitungen aus Metall werden derzeit häufig mit einem Polyolefin wie z. B. Polyethylen oder Polypropylen umhüllt (WO 2002/094922; US 2002/0066491; EP-A-0 346 101). Die Beschichtungen bzw. Umhüllungen dienen primär dem Korrosionsschutz; sie werden durch entsprechende Normen beschrieben. Für die Polyolefinumhüllungen sind dies beispielsweise die DIN EN 10288 bzw. die DIN 30678. Im Falle der Polyolefinumhüllung wird diese Schicht beispielsweise mittels Schlauch- oder Wickelextrusion hergestellt. Zur Haftvermittlung können vor der Extrusion Epoxy- und Kleberschichten nacheinander aufgebracht werden.

Ein anderer Stand der Technik, der durch die DIN EN 10310 (Deutsche Fassung EN 10310:2003) geregelt ist, sieht die Beschichtung von Stahlrohren für erd- und wasserverlegte Rohrleitungen mittels Polyamidpulver vor. Die Polyamidbeschichtung wird durch Eintauchen in ein Fluidadbett, Aufsprühen oder im Walzauftragsverfahren aufgebracht. Verfahrensbedingt lassen sich mittels Pulverbeschichtung nur relativ dünne Schichten auf das Metall aufbringen. Nachteilig ist insbesondere, dass für die Beschichtung ein Pulver aus einem relativ niedermolekularen Polyamid eingesetzt werden muss, um einen guten Verlauf der Schmelze auf der heißen Metalloberfläche zu gewährleisten. Eine so erhaltene Beschichtung dient in erster Linie dem Korrosionsschutz. Darüber hinaus sind auch duromere Beschichtungen auf Epoxid- oder Polyurethanbasis bekannt.

Im Rohrleitungsbau werden in zunehmendem Maße höhere technische Anforderungen an die Rohrbeschichtung gestellt, da die Umwelt-, Verlege- und Betriebsbedingungen immer anspruchsvoller werden. Eine der effektivsten Methoden zum Schutze erdverlegter Rohrleitungen vor Korrosion, insbesondere bei kathodischem Korrosionsschutz, ist eine mehrlagige Ummantelung. Diese besteht aus einer Epoxidharzschicht als erste Schicht, einem Copolymer als Kleber als zweite Schicht und einer äußeren Polyolefinschicht aus Polyethylen oder Polypropylen. Diese Ummantelungsmethode ist für kleine Rohre bis hin zu Großrohren anwendbar. Allerdings werden im Offshore- und Onshore-Bereich oftmals zusätzlich hohe Anforderungen an den Widerstand gegenüber mechanischen Beanspruchungen gestellt. Um zusätzlich diesem Problem Rechnung zu tragen, empfiehlt die WO 2010/094528 die Verwendung eines metallischen Leitungsrohrs, das mit einer extrudierten Schicht aus einer Polyamidformmasse umhüllt ist, zur Herstellung einer im Wasser verlegten Rohrleitung. Die DE 10 2007 040683 A1 beschreibt eine grabenlos und/oder sandbettfrei verlegte Rohrleitung, die unter Verwendung eines Rohrs hergestellt wird, das eine Metallschicht sowie eine extrudierte Schicht aus einer Polyamidformmasse enthält.

Eine Beschädigung derartiger Korrosionsschutzbeschichtungen führt zur Korrosion der zu schützenden Stahlkonstruktion und kann so zu einer strukturellen Gefährdung des Bauwerkes bzw. der Rohrleitung führen. Stand der Technik ist daher einerseits, vor allem bei Offshorebauwerken, eine regelmäßige Vor-Ort-Inspektion des Korrosionsschutzes; andererseits wird die Stahlkonstruktion inklusive eines Sicherheitsfaktors ausgelegt, der eine durch beschädigte Schutzschichten bedingte, zeitlich begrenzte Korrosion der Stahlkonstruktion erlaubt.

Da beispielsweise Offshore-Windenergieanlagen nicht durchgängig besetzt sind, ist die Inspektion dieser Windenergieanlagen mit deutlich erhöhtem Aufwand verbunden; es ist immer eine Anreise zur Anlage notwendig. Durch äußere Einflüsse des Wetters und der See ist eine Anreise oder eine optische Inspektion der Anlage aber nicht immer möglich, was die Inspektion zusätzlich erschwert.

Die Aufgabe der Erfindung ist daher, ein Verschleißindikatorsystem für Korrosionsschutz-Umhüllungssysteme zu entwickeln, das auch bei nicht regelmäßiger Besetzung von Offshore-Bauwerken eine zuverlässige Beurteilung des Korrosionsschutzes ermöglicht. Insbesondere sollten damit Anfahrten zu diesen Bauwerken auf ein Minimum begrenzt sowie auch der Sicherheitszuschlag bei der Auslegung dieser Bauwerke verringert werden können.

Diese Aufgabe wurde gelöst durch die Verwendung eines Metallrohrs zum Einbau in ein Offshore-Bauwerk oder zur Herstellung einer in Wasser verlegten Rohrleitung, bei denen eine Beschädigung der Beschichtung durch den dann auftretenden Kurzschluss mittels Fernwartung detektiert werden kann, wobei das Metallrohr eine mindestens zweischichtige Korrosionsschutzumhüllung mit einer oberen und einer unteren Schicht besitzt, die jeweils aus einem polymeren Material bestehen, wobei die untere Schicht so ausgerüstet ist, dass bei einer Beschädigung der darüberliegenden Schicht bzw. Schichten ein elektrisches Signal detektiert werden kann, indem die untere Schicht elektrisch leitend und die obere Schicht elektrisch isolierend ausgelegt ist.

Durch das Anlegen einer elektrischen Spannung gegen das Wasser ist es so möglich, eine Beschädigung der Beschichtung durch den dann auftretenden Kurzschluss mittels Fernwartung zu detektieren. Beim Wasser handelt es sich vorzugsweise um Wasser, das gelöste Salze enthält, beispielsweise Meer- oder Brackwasser. Die elektrisch leitende Schicht kann gegen das Metall isoliert sein. Sie kann aber auch mit dem Metall leitend verbunden sein, so dass sich die Metallkonstruktion auf dem gleichen Potential befindet.

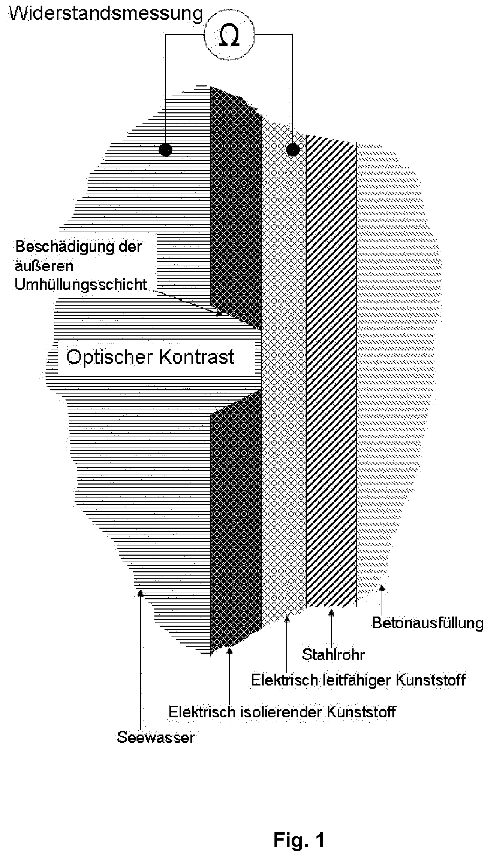

In einer weiteren Ausführungsform stellen sich zusätzlich zwei übereinander liegende Schichten optisch kontrastierend dar. Im Allgemeinen unterscheiden sie sich in der Farbe. Wird beispielsweise die obere Schicht gelb eingestellt und die untere Schicht rot, so kann durch das Auftreten roter Bereiche eine Beschädigung der oberen Schicht festgestellt werden. Der Kontrast entspricht vorzugsweise mindestens dem Graumaßstab (gemäß DIN EN 20105-A02) von 4, besonders bevorzugt mindestens dem Graumaßstab von 3 und insbesondere bevorzugt mindestens dem Graumaßstab von 2/3. Die Messung erfolgt gemäß DIN EN ISO 11664-4 mit einem Spektralphotometer (Kugel). Eine Beschädigung wird durch das Auftreten eines Kurzschlusses detektiert und per Fernwartung gemeldet; vor Ort kann die Beschädigung dann durch den optischen Kontrast schnell gefunden und repariert werden. Das Prinzip wird in der Fig. 1 veranschaulicht.

In der Fig. 1 ist ein Stahlrohr mit Betonausfüllung dargestellt, das mit einer Schicht aus einem elektrisch leitfähigen Kunststoff und darauf folgend mit einer Schicht aus einem elektrisch isolierenden Kunststoff überzogen ist. Beide Kunststoffmaterialien sind unterschiedlich eingefärbt. Die äußere, elektrisch isolierende Umhüllungsschicht ist an einer Stelle beschädigt, so dass die elektrisch leitfähige Schicht in Kontakt mit Seewasser tritt. Dadurch wird über eine elektrische Widerstandsmessung ein Kurzschluss detektiert. Die beschädigte Stelle ist anhand des optischen Kontrasts auffindbar.

Die elektrisch leitende Auslegung der unteren Schicht kann auf bekannte Weise erfolgen, beispielsweise durch Verwendung einer mit Leitfähigkeitsruß gefüllten Formmasse oder durch Einbetten von axial verlaufenden oder gewickelten elektrischen Leitern, beispielsweise Drähten, Litzen oder Bändern.

Das Offshore-Bauwerk ist vorzugsweise eine Offshore-Windenergieanlage, eine Bohrinsel oder ein Leuchtturm.

Die Gründungsstruktur einer Offshore-Windenergieanlage ist die Struktur, die den Turm trägt. Sie erstreckt sich von den Gründungselementen, die im Meeresboden verankert sind, über die Struktur, die sich unter Wasser befindet, bis zu der Stelle, an der der Turm ansetzt und die sich oberhalb des Ruhewasserspiegels befinden kann.

Als Gründungsstruktur werden beispielsweise folgende Typen verwendet:
Die Monopile-Konstruktion besteht aus einem zylindrischen hohlen Pfahl. Das Monopile wird in vielen europäischen Offshore-Windparks in Küstennähe verwendet; es eignet sich für Fundamente in Wassertiefen bis zu derzeit etwa 20 Metern. Monopiles können einfach und schnell installiert werden; für die Errichtung werden jedoch schwere Rammgeräte benötigt. Mittlerweile werden Versuche einer schonenden Installation mit Bohrkopf durchgeführt.

Das Jacket ist eine Fachwerkskonstruktion aus Stahl, die der Konstruktion von üblichen Strommasten ähnelt. An seinen vier Füßen wird das Jacket mit Pfählen im Meeresboden verankert. Die Jacketkonstruktion hat sich bereits in der Ölindustrie in größeren Wassertiefen bewährt. Durch die Fachwerkskonstruktion lassen sich gegenüber dem Monopile 40 bis 50 % Stahl einsparen. So steigen die Projektkosten beim Einsatz dieser Konstruktion in größeren Wassertiefen nur relativ gering an. Da die einzelnen Bauelemente relativ klein sind, lassen sie sich leicht produzieren und können einfach transportiert und montiert werden.

Beim Tripod besteht die Struktur aus einem aus Stahlrohren gebildeten Dreibein, auf dem das Zentralrohr zentrisch aufgesetzt wird. Die Beine des Dreibeins können auf je einem Pfahl oder auch auf mehreren aufsitzen. Zur Pfahlrammung sind an den Eckpunkten des sich ergebenden gleichseitigen Dreiecks Zentrierhülsen angeordnet. Die Pfähle sind untereinander durch horizontale Streben verbunden und an das Zentralrohr über diagonale Abstrebungen angeschlossen. Das Zentralrohr bindet nicht in den Meeresboden ein. Da hier Stahlrohre mit kleineren Durchmessern verwendet werden, kann das Tripod für Wassertiefen von mehr als 20 Metern eingesetzt werden.

Beim Quadropod handelt es sich um eine Modifikation des Tripod-Konzepts mit vier statt drei Verstrebungen. Hierbei wird eine erhöhte Gründungssteifigkeit bei großen Wassertiefen erzielt.

Das Tripile besteht aus drei Stahlpfeilern, die unter Wasser verankert werden. Über Wasser wird auf diesen Stahlpfeilern eine Dreibeinkonstruktion aufgesetzt. Nach Herstellerangaben sind Tripile-Fundamente für Wassertiefen von 25 bis zu 50 Metern geeignet.

Derartige Konstruktionen werden beispielsweise in folgenden Publikationen beschrieben:
- Fundamente für Offshore-Windenergieanlagen, Deutsche Energie-Agentur GmbH, Stand 12/09;
- Florian Biehl, Kollisionssicherheit von Offshore-Windenergieanlagen, Stahlbau, Band 78 (6), S. 402 - 409 (2009);
- K. Lesny, W. Richwien (Herausgeber), Gründung von Offshore-Windenergieanlagen - Werkzeuge für Planung und Bemessung, VGE Verlag Glückauf 2008, ISBN: 978-3-86797-035-8;
- DE 103 10 708 A1.

Die obere und die untere Schicht der Korrosionsschutzumhüllung bestehen aus einem polymeren Material, beispielsweise aus einer Polyamidformmasse, einer Polyolefinformmasse, einer Fluorpolymerformmasse (etwa auf Basis von PVDF), einer Formmasse auf Basis eines thermoplastischen Polyurethans, einem vernetzten Polyurethan oder einem vernetzten Epoxidharz.

In einer bevorzugten Ausführungsform besteht die obere Schicht aus einer durch Extrusion aufgebrachten Polyamidformmasse. Die untere Schicht kann dann entweder ebenfalls aus einer Polyamidformmasse, einer Polyolefinformasse oder aus einem anderen polymeren Material bestehen. Das Material dieser unteren Schicht kann ein Haftharz enthalten, beispielsweise Epoxidharz (etwa Araldit®); in diesem Fall kann diese Schicht direkt auf der Metalloberfläche aufgebracht sein.

Im Allgemeinen befindet sich aber zwischen der Metalloberfläche und der unteren Schicht mindestens eine weitere Schicht. Beispielsweise kann es sich um folgende Schichten handeln:
- Eine Keramikschicht, beispielsweise gemäß WO 03/093374;
- eine Grundierungsschicht, beispielsweise aus Epoxidharz (US 5 580 659) oder einer wasserbasierenden Mischung aus Epoxidharz und Polyacrylatlatex (WO 00/04106);
- eine Haftvermittlerschicht aus einem Polyamidschmelzkleber, der beispielsweise als Pulver durch Sprühen etc. aufgebracht werden kann (EP 1 808 468 A2), oder aus einem Polyolefin, das funktionelle Gruppen trägt. Als funktionelle Gruppen kommen beispielsweise Carboxylgruppen oder Säureanhydridgruppen (WO 02/094922), Epoxygruppen oder Alkoxysilangruppen (EP-A-0 346 101) in Frage. Die Polyolefinschicht kann auch geschäumt sein. Das Polyolefin ist bevorzugt Polyethylen oder Polypropylen;
- ein anders zusammengesetzter Haftvermittler, der gewährleisten soll, dass bei mechanischer Beanspruchung der Verbund von Polyamidschicht und Grundmaterial nicht beeinträchtigt wird;
- eine textile Verstärkung in Form von Gewebe oder Matten, beispielsweise aus Glasfasern oder Aramidfasern (Kevlar).

Eine eventuelle Keramikschicht, Grundierungsschicht, Haftvermittlerschicht und/oder textile Verstärkung wird auf das Rohr nach jedem beliebigen Verfahren aufgebracht. Geeignete Verfahren sind Stand der Technik.

Die Materialien der oberen und der unteren Schicht werden gemäß bekannter Verfahren, beispielsweise mittels Schlauch- oder Wickelextrusion, aufgebracht. In einer möglichen Variante können beide Schichten, ggf. zusammen mit einer Haftvermittlerschicht, durch Coextrusion eines Mehrschichtverbundes erzeugt und aufgebracht werden.

Die Schlauch- und die Wickelextrusion sind seit langem bewährte Umhüllungsverfahren für Rohre. Näher beschrieben werden diese Verfahren im Stahlrohr-Handbuch, 12. Auflage, S. 392-409, Vulkan-Verlag Essen, 1995.

Die aufgebrachten Schichten müssen mindestens so dick sein, dass sie unter den Bedingungen der Aufbringung als geschlossene Schicht erzeugt werden können. Vorzugsweise beträgt die Schichtdicke mindestens 0,5 mm, besonders bevorzugt mindestens 1,0 mm und insbesondere bevorzugt mindestens 1,2 mm.

Üblicherweise haben sich Schichtdicken bis etwa 8 mm, vorzugsweise bis etwa 7 mm, besonders bevorzugt bis etwa 6 mm und insbesondere bevorzugt bis etwa 5 mm bewährt. Bei Bedarf kann die Schicht jedoch auch dicker gewählt werden, beispielsweise bis 30 mm oder mehr.

Das Metallrohr besteht beispielsweise aus Stahl, Edelstahl, Kupfer, Aluminium, Gusseisen, Zink, Legierungen mit einem dieser Metalle als Hauptbestandteil, Messing, verzinktem Stahl, cadmiertem Stahl, aluminiumbeschichtetem Metall, mit Metalllegierungen wie z. B. GALFAN beschichtetem Stahl oder aus jedem anderen Metall. Das Rohr kann nach allen Methoden des Standes der Technik hergestellt werden, z. B. als geschweißtes oder nahtloses Rohr. Entsprechende Herstellungsverfahren sind allgemein bekannter Stand der Technik.

Der Außendurchmesser des Metallrohrs beträgt vorzugsweise mindestens 20 mm und maximal 8000 mm.

Die einzelnen Rohre werden auf bekannte Weise konstruktiv miteinander verbunden, beispielsweise durch Schweißen.

Ein besonderer Vorteil der Erfindung ist, dass der Schaden bereits dann festgestellt und repariert werden kann, wenn die Metallkonstruktion selbst noch nicht begonnen hat zu korrodieren. In diesem Fall ist die Reparatur insgesamt erheblich weniger aufwendig.

## Patentansprüche

1. Verwendung eines Metallrohrs zum Einbau in ein Offshore-Bauwerk oder zur Herstellung einer in Wasser verlegten Rohrleitung, bei denen eine Beschädigung der Beschichtung durch den dann auftretenden Kurzschluss mittels Fernwartung detektiert werden kann,
wobei das Metallrohr eine mindestens zweischichtige Korrosionsschutzumhüllung mit einer oberen und einer unteren Schicht besitzt, die jeweils aus einem polymeren Material bestehen, wobei die untere Schicht so ausgerüstet ist, dass bei einer Beschädigung der darüberliegenden Schicht bzw. Schichten ein elektrisches Signal detektiert werden kann, indem die untere Schicht elektrisch leitend und die obere Schicht elektrisch isolierend ausgelegt ist.

2. Verwendung gemäß Anspruch 1,
**dadurch gekennzeichnet,**
**dass** die untere und die obere Schicht optisch kontrastierend eingestellt sind, so dass der Kontrast mindestens dem Graumaßstab 4 gemäß DIN EN 20105-A02 entspricht.

3. Verwendung gemäß einem der vorhergehenden Ansprüche,
**dadurch gekennzeichnet,**
**dass** die obere Schicht aus einer durch Extrusion aufgebrachten Polyamidformmasse besteht.

4. Verwendung gemäß einem der vorhergehenden Ansprüche,
**dadurch gekennzeichnet,**
**dass** der Einbau in die Gründungsstruktur eines Offshore-Bauwerks erfolgt.

5. Verwendung gemäß einem vorhergehenden Ansprüche,
**dadurch gekennzeichnet,**
**dass** das Offshore-Bauwerk eine Windenergieanlage, eine Bohrinsel oder ein Leuchtturm ist.

6. Verwendung gemäß Anspruch 5,
**dadurch gekennzeichnet,**
**dass** das Offshore-Bauwerk eine Windenergieanlage und die Gründungsstruktur ein Monopile, ein Jacket, ein Tripod, ein Quadropod oder ein Tripile ist.

## Claims

1. Use of a metal pipe for installation in an offshore structure or for producing a pipeline laid in water, in which damage to the coating can be detected by means of remote maintenance by the short circuit which then occurs, wherein the metal pipe has an at least two-layer corrosion protection covering with an upper and a lower layer, which each consists of a polymer material, wherein the lower layer is finished such that, in the event of damage to the layer or layers lying above, an electrical signal can be detected, in that the lower layer is designed to be electrically conductive and the upper layer is designed to be electrically insulating.

2. Use according to Claim 1,
**characterized in that**
the lower and the upper layer are set in an optically contrasting manner, so that the contrast corresponds at least to the grey scale 4 according to DIN EN 20105-A02.

3. Use according to one of the preceding claims,
**characterized in that**
the upper layer consists of a polyamide moulding compound applied by extrusion.

4. Use according to one of the proceeding claims,
**characterized in that**
the installation is carried out in the foundation structure of an offshore structure.

5. Use according to one of the proceeding claims,
**characterized in that**
the offshore structure is a wind power plant, a drilling rig or a lighthouse.

6. Use according to Claim 5,
**characterized in that**
the offshore structure is a wind power plant and the foundation structure is a monopile, a jacket, a tripod, a quadropod or a tripile.

## Revendications

1. Utilisation d'un tube métallique pour l'incorporation dans un bâtiment offshore ou pour la fabrication d'une canalisation placée dans l'eau, selon laquelle un endommagement du revêtement peut être détecté par télémaintenance par le court-circuit qui se produit alors, le tube métallique comprenant un gainage anticorrosion au moins bicouche avec une couche supérieure et une couche inférieure, qui sont chacune constituées par un matériau polymère, la couche inférieure étant configurée de sorte qu'un signal électrique puisse être détecté lors d'un endommagement de la ou des couches sous-jacentes, par configuration de la couche inférieure sous forme électriquement conductrice et de la couche supérieure sous forme électriquement isolante.

2. Utilisation selon la revendication 1, **caractérisée en ce que** la couche inférieure et la couche supérieure sont ajustées pour être optiquement contrastées, de sorte que le contraste corresponde au moins à l'échelle de gris 4 selon DIN EN 20105-A02.

3. Utilisation selon l'une quelconque des revendications précédentes, **caractérisée en ce que** la couche supérieure est constituée par un matériau de moulage polyamide appliqué par extrusion.

4. Utilisation selon l'une quelconque des revendications précédentes, **caractérisée en ce que** l'incorporation a lieu dans la structure de fondation d'un bâtiment offshore.

5. Utilisation selon l'une quelconque des revendications précédentes, **caractérisée en ce que** le bâtiment offshore est une centrale éolienne, une plateforme de forage ou un phare.

6. Utilisation selon la revendication 5, **caractérisée en ce que** le bâtiment offshore est une centrale éolienne et la structure de fondation est une fondation monopile, une fondation de type jacket, une fondation à trois pieds, une fondation à quatre pieds ou une fondation tripile.
